# DEMANDE DE BREVET EUROPEEN

(11) **EP 2 130 570 A1**
(43) Date de publication de la demande: **09.12.2009**
(21) Numéro de dépôt: 08290516.7
(22) Date de dépôt: 05.06.2008
(51) Int. Cl.: A63F 13/02

(54) **Accessoire immersif pour console de jeux vidéo portable**

(71) Demandeur: Bigben Interactive SA, 59818 Lesquin (FR)
(72) Inventeur: Allaert, Yannick, 59221 Bauvin (FR); Falc, Alain, 8500 Kortrijk (BE)
(74) Mandataire: Vigand, Philippe

(57) **Abrégé**

Système de réalité virtuelle pour l'exercice d'une activité physique comprenant une console de jeux vidéo portable (10) munie d'une première interface homme machine (11) et un accessoire immersif (20; 30) muni d'une deuxième interface homme machine (21) et connecté à la console, la console fournissant en sortie des signaux dépendant des signaux reçus par les deux interfaces homme machine, caractérisé en ce que l'accessoire comprend une première partie (22) dans laquelle est prévu un logement (24) apte à recevoir la console et une deuxième partie (23) distincte de la première, sur laquelle est agencée la deuxième interface homme machine, les deux interfaces homme machine étant décalées l'une par rapport à l'autre de sorte que la posture des membres de l'utilisateur du système en contact avec les deux interfaces homme machine, est semblable à la posture des membres lors de l'exercice réel de l'activité physique.

## Description

### DOMAINE TECHNIQUE

La présente invention concerne de manière générale un périphérique ou accessoire immersif pour console portable de jeux vidéo. Plus particulièrement l'invention concerne un accessoire immersif dans lequel est intégrée la console, et le système de réalité virtuelle ainsi obtenu.

### ARRIERE-PLAN TECHNOLOGIQUE

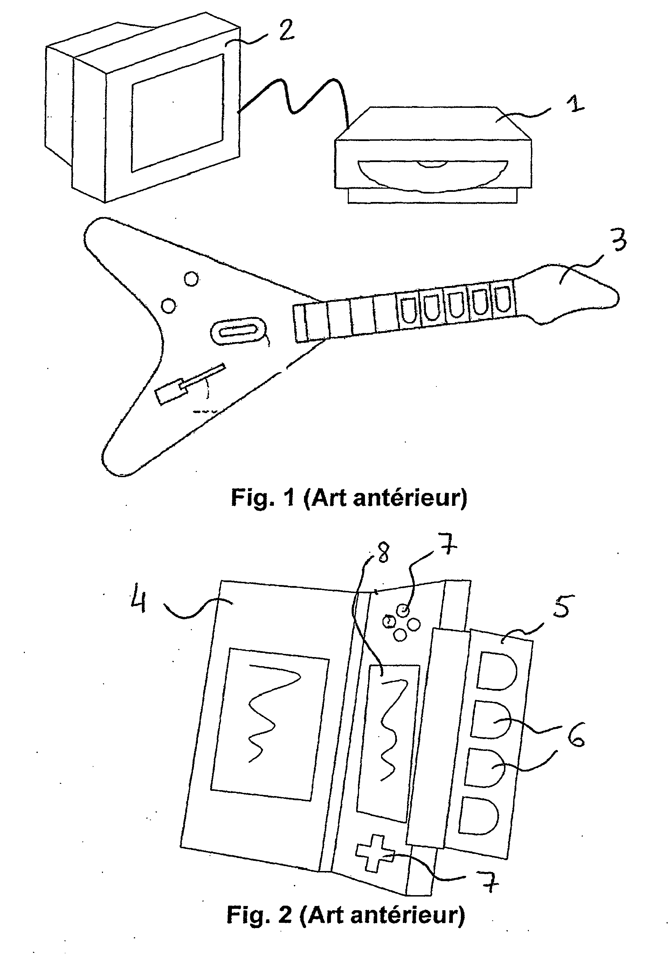

Le domaine des jeux vidéo est en constante évolution et il s'avère nécessaire de rendre les jeux toujours plus immersifs pour séduire les utilisateurs et leur fournir des sensations de jeux simulant toujours plus les conditions réelles qu'ils pourraient rencontrer. Dans ce but, il a été développé un certain nombre d'accessoires immersifs que le joueur utilise notamment comme contrôleur de jeu. On pourra citer par exemple, un concept consistant à avoir un contrôleur de jeu en forme générale de guitare de manière à ce que le joueur jouant avec un jeu de simulation de guitare ait l'impression de jouer réellement à la guitare. La figure 1 représente un système de réalité virtuelle pour jouer à la guitare selon l'art antérieur comprenant une console de jeux vidéo 1 fixe c'est-à-dire positionné sur un support en liaison avec un moniteur 2, comme par exemple un écran de télévision, pour afficher les informations graphiques liées au jeu de guitare et un accessoire 3 en forme de guitare utilisé comme contrôleur de jeu par le joueur. Bien que ces jeux immersifs rencontrent un certain succès commercial, ils présentent l'inconvénient de nécessiter toute une installation comprenant le moniteur, un raccordement entre la console et le moniteur ainsi qu'à un réseau d'alimentation électrique, éventuellement un support de console, etc....

De ce fait, un autre aspect également important de l'évolution dans le domaine des jeux vidéo est la miniaturisation et la portabilité des éléments de jeu pour permettre notamment de pouvoir jouer sans avoir besoin de moniteur ni de raccordement à un réseau électrique. A cet effet, de nouvelles générations de console de jeux vidéo portables ont été développées de sorte qu'il est possible de jouer beaucoup plus facilement, comme par exemple dans les transports où à l'extérieur de chez soi, dans la mesure où la console sert directement de contrôleur de jeu et de moniteur et ne nécessite aucun raccordement à un réseau électrique pour jouer. Dans ce même esprit de portabilité et de facilité de jeu, il a été développé un accessoire sous forme de poignée agrippante, tel que représenté à la figure 2. Sur cette figure 2 est visible une console portable 4 sur laquelle a été clipsée une poignée agrippante 5 permettant au joueur de tenir sa console d'une seule main en ayant accès à des boutons de commande 6 situés sur la poignée agrippante et de pouvoir utiliser son autre main pour activer les organes de commande 7 de la console portable. Comme dans l'exemple de la figure 1, la poignée agrippante 5 de la figure 2 a été développée pour un jeu de simulation de guitare dans lequel le joueur simule le grattage des cordes au moyen d'un stylet venant gratter un écran tactile 8 de la console portable et simule le pincement des cordes au moyen des boutons de commande 6 accessibles sur la poignée agrippante. Cette solution de jeu de simulation utilisant une console portable et une telle poignée agrippante, bien qu'elle présente certains avantages en termes de flexibilité de jeu, perd le caractère immersif si attrayant pour de tels jeux de simulation. Ainsi les solutions existantes apportent une incompatibilité apparente entre immersivité et portabilité d'un système de jeu.

### RESUME DE L'INVENTION

Le but de la présente invention est de répondre aux différents inconvénients mentionnés ci-dessus, et en particulier, de fournir un système de réalité virtuelle permettant au joueur de bénéficier d'une grande flexibilité de jeu, de portabilité et d'un caractère immersif accru, autrement dit à fournir un bon compromis entre la portabilité du système et son caractère immersif.

Pour cela, un premier aspect de l'invention concerne un système de réalité virtuelle pour l'exercice d'une activité physique comprenant une console de jeux vidéo portable munie d'une première interface homme machine et un accessoire immersif muni d'une deuxième interface homme machine et connecté à la console, la console fournissant en sortie des signaux dépendant des signaux reçus par les deux interfaces homme machine,, caractérisé en ce que l'accessoire comprend une première partie dans laquelle est prévue un logement apte à recevoir la console et une deuxième partie distincte de la première partie, sur laquelle est agencée la deuxième interface homme machine, les deux interfaces homme machine étant décalées l'une par rapport à l'autre de sorte que la posture des membres de l'utilisateur du système en contact avec les deux interfaces homme machine, est semblable à la posture des membres lors de l'exercice réel de l'activité physique.

Un tel système de réalité virtuelle permet d'accroître le caractère immersif de l'accessoire grâce à l'agencement des deux interfaces homme machine de sorte que l'exercice de l'activité physique par le biais du système s'apparente à l'exercice réel de l'activité. En outre, l'intégration de la console portable directement dans l'accessoire immersif assure la flexibilité de jeu, la portabilité et la miniaturisation également souhaitée dans la mesure où l'ensemble du système est facilement déplaçable et utilisable dans toutes conditions.

Selon un premier mode de réalisation avantageux, l'accessoire immersif a une forme générale d'instrument de musique dont la première partie a une forme de caisse et dont la deuxième partie a une forme de manche. De préférence, l'accessoire immersif a une forme générale de guitare. Un système de réalité virtuelle selon ce premier mode permet de jouer virtuellement de la guitare de façon immersive et flexible, les mains du joueur étant positionnée comme celles d'un vrai joueur de guitare.

Selon un deuxième mode de réalisation, la première partie a une forme de mât et la deuxième partie a une forme de planche. De préférence, l'accessoire immersif a une forme générale de planche à voile. Un système de réalité virtuelle selon ce deuxième mode permet de faire virtuellement de la planche à voile de façon immersive et flexible.

Un deuxième aspect de la présente invention concerne un accessoire immersif pour un système de réalité virtuelle selon le premier aspect, l'accessoire comprenant une première partie dans laquelle est prévue un logement apte à recevoir la console et une deuxième partie distincte de la première, sur laquelle est agencée la deuxième interface homme machine décalée par rapport au logement.

Un troisième aspect de la présente invention concerne une méthode pour l'exercice d'une activité physique au moyen d'un système de réalité virtuelle selon le premier aspect de l'invention, caractérisée en ce qu'elle comprend les étapes consistant à connecter la console de jeux vidéo avec l'accessoire immersif, intégrer la console dans le logement de l'accessoire, réservé à cet effet et positionner l'accessoire immersif de sorte que la posture des membres de l'utilisateur du système en contact avec les deux interfaces homme machine, est semblable à la posture des membres lors de l'exercice réel de l'activité physique.

### BREVE DESCRIPTION DES FIGURES

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
- la figure 1, déjà décrite, représente un accessoire immersif en forme de guitare destiné à être utilisé avec une console fixe et un moniteur indépendant;
- la figure 2, déjà, décrite, représente un système de réalité virtuelle pour jouer de la guitare selon l'art antérieur;
- la figure 3 représente un système de réalité virtuelle pour jouer de la guitare selon un premier mode de réalisation;
- la figure 4 représente un accessoire immersif pour le système de réalité virtuelle selon le premier mode de réalisation;
- la figure 5 représente un système de réalité virtuelle pour faire de la planche à voile selon un deuxième mode de réalisation.

### DESCRIPTION DETAILLEE DE L'INVENTION

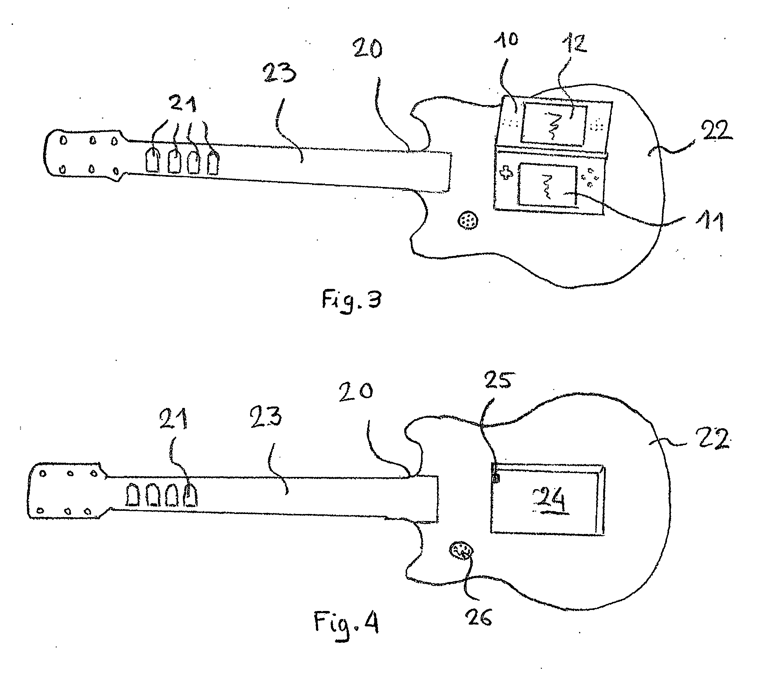

L'invention sera décrite ci-après uniquement à titre d'exemple non limitatif en relation avec les figures 3 à 5, les figures 1 et 2 ayant été déjà décrites en liaison avec l'art antérieur.

La figure 3 représente un système de réalité virtuelle pour l'exercice d'une activité physique et plus particulièrement dans le cadre du premier mode de réalisation présenté ici, pour jouer de la guitare. Le système comprend une console de jeux vidéo portable 10 et un accessoire immersif 20 présentant dans cet exemple une forme générale de guitare.

Afin de rendre le jeu immersif, il est prévu deux interfaces homme machine pour jouer. La première interface est intégrée à la console de jeux vidéo portable et la deuxième interface est intégrée à l'accessoire immersif, qui est connecté à la console. Ainsi, le joueur transmet des premiers signaux de commande par le biais de la première interface liée à la console et des deuxièmes signaux de commande par le biais de la deuxième interface liée à l'accessoire. A travers la connexion entre l'accessoire et la console, les deuxièmes signaux de commande sont transmis à la console, qui comprend une unité de traitement pour générer des troisièmes signaux de données en fonction des premiers et deuxièmes signaux de commande reçus. Dans l'exemple d'un jeu de guitare, les troisièmes signaux de données générés par la console sont des signaux sonores, c'est-à-dire la musique résultante de l'action du joueur sur les deux interfaces homme machine.

Toujours dans le cadre de l'exemple d'un jeu de guitare, la première interface homme machine comprend un écran tactile 11 sur lequel le joueur vient gratter directement ou au moyen d'un stylet médiateur pour simuler l'action de grattage des cordes sur une guitare classique. La deuxième interface homme machine comprend des boutons de commande 21 sur lesquels le joueur vient presser pour simuler l'action de pincement des cordes sur une guitare classique. Les instructions de jeu pour gratter la première interface ou respectivement pour pincer la deuxième interface, peuvent être fournies au joueur par l'intermédiaire d'un deuxième écran de contrôle 12 de la console.

La présente invention est particulièrement intéressante en ce que l'accessoire immersif, une guitare 20 dans cet exemple, comprend une première partie, sous la forme d'une caisse 22, dans laquelle est prévu un logement apte à recevoir la console 10 et une deuxième partie, sous la forme d'un manche 23, distincte de la première, sur laquelle est agencée la deuxième interface homme machine. De cette manière, les deux interfaces homme machine 11 et 21 sont décalées l'une par rapport à l'autre de sorte que la posture des membres du joueur, en contact avec les deux interfaces homme machine, est semblable à la posture des membres lors de l'exercice réel de l'activité physique, c'est-à-dire ici jouer de la guitare. On obtient ainsi un effet immersif accru sans perte les avantages de portabilité et flexibilité liée à l'utilisation d'une console de jeu portable. Ainsi, le joueur voulant jouer virtuellement de la guitare tient d'une main la guitare par le manche de manière à accéder à la deuxième interface homme machine, i.e. aux boutons de commande 21, et pose la caisse sur sa cuisse ou utilise autour du cou une sangle (non représentée) de manière à laisser libre son autre main pour accéder à la première interface homme machine.

La figure 4 représente uniquement l'accessoire immersif pour le système de réalité virtuelle selon le premier mode de réalisation exposé en liaison avec la figure 3. On retrouve donc l'accessoire immersif en forme générale de guitare 20, comprenant une première partie, sous la forme d'une caisse 22 dans laquelle est prévu un logement 24 apte à recevoir la console et lui servir de support et une deuxième partie, sous la forme d'un manche 23 distincte de la première, sur laquelle sont agencés des boutons de commande 21 servant d'interface homme machine. Ces boutons de commande 21 sont décalés par rapport au logement 24 de sorte que la posture des membres du joueur, après insertion de la console, soit semblable à la posture des membres d'un joueur de guitare classique.

La connexion entre l'accessoire immersif et la console est réalisée à l'intérieur du logement 24 au moyen d'un connecteur 25 intégré à la guitare, relié aux boutons de commande 21 et venant se connecter à la console. Cette connexion est avantageusement utilisée également pour renvoyer les sons générés par la console à l'accessoire de manière à bénéficier du haut-parleur 26 intégré à la caisse de l'accessoire et présentant une puissance plus importante que celui de la console.

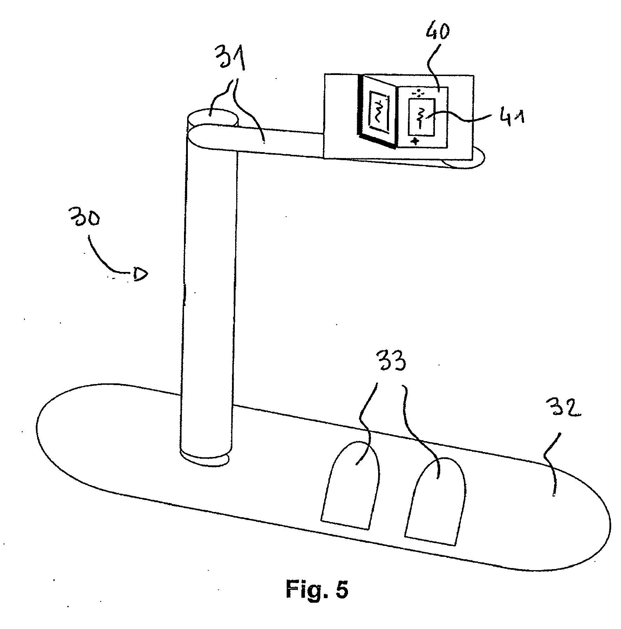

La figure 5 représente un système de réalité virtuelle pour faire de la planche à voile selon un deuxième mode de réalisation. Dans cet autre exemple, le fonctionnement expliquer ci-dessus en liaison avec les figures 3 et 4, reste valable et ne sera donc pas décrit à nouveau.

Selon ce deuxième mode de réalisation, l'accessoire immersif 30 comprend une première partie, sous forme de mât articulé, sur lequel est prévu un logement apte à recevoir une console 40 munie d'une première interface homme machine 41 et une deuxième partie, sous forme d'une planche 32, sur laquelle est prévue une deuxième interface homme machine formée par des empreintes 33 pour les pieds du joueur, susceptibles de détecter la répartition de la charge du joueur sur la planche.

La présente invention concerne aussi une méthode pour l'exercice d'une activité physique au moyen d'un système de réalité virtuelle tel que ceux présentés ci-dessus. La méthode comprend les étapes consistant à connecter la console de jeux vidéo avec l'accessoire immersif, intégrer la console dans le logement de l'accessoire, réservé à cet effet et à positionner l'accessoire immersif de sorte que la posture des membres de l'utilisateur du système en contact avec les deux interfaces homme machine, est semblable à la posture des membres lors de l'exercice réel de l'activité physique.

On comprendra que diverses modifications et / ou améliorations évidentes pour l'homme du métier peuvent être apportées aux différents modes de réalisation de l'invention décrits dans la présente description sans sortir du cadre de l'invention défini par les revendications annexées.

## Revendications

1. Système de réalité virtuelle pour l'exercice d'une activité physique comprenant une console de jeux vidéo portable (10) munie d'une première interface homme machine (11) et un accessoire immersif (20; 30) muni d'une deuxième interface homme machine (21) et connecté à la console, la console fournissant en sortie des signaux dépendant des signaux reçus par les deux interfaces homme machine, **caractérisé en ce que** l'accessoire comprend une première partie (22) dans laquelle est prévu un logement (24) apte à recevoir la console et une deuxième partie (23) distincte de la première partie, sur laquelle est agencée la deuxième interface homme machine, les deux interfaces homme machine étant décalées l'une par rapport à l'autre de sorte que la posture des membres de l'utilisateur du système en contact avec les deux interfaces homme machine, est semblable à la posture des membres lors de l'exercice réel de l'activité physique.

2. Système de réalité virtuelle selon la revendication 1, **caractérisé en ce que** l'accessoire immersif a une forme générale d'instrument de musique dont la première partie a une forme de caisse et dont la deuxième partie a une forme de manche.

3. Système de réalité virtuelle selon la revendication 2, **caractérisé en ce que** l'accessoire immersif a une forme générale de guitare.

4. Système de réalité virtuelle selon la revendication 1, **caractérisé en ce que** la première partie (31) a une forme de mât et la deuxième partie a une forme de planche (32).

5. Système de réalité virtuelle selon la revendication 4, **caractérisé en ce que** l'accessoire immersif a une forme générale de planche à voile.

6. Accessoire immersif pour système de réalité virtuelle pour l'exercice d'une activité physique selon la revendication 1, comprenant une première partie dans laquelle est prévue un logement apte à recevoir la console et une deuxième partie distincte de la première, sur laquelle est agencée la deuxième interface homme machine décalée par rapport au logement.

7. Accessoire immersif selon la revendication 6, **caractérisé en ce qu'**il présente une forme générale d'instrument musique dont la première partie a une forme de caisse et dont la deuxième partie a une forme de manche.

8. Accessoire immersif selon la revendication 7, **caractérisé en ce que** l'accessoire immersif a une forme générale de guitare.

9. Accessoire immersif selon l'une des revendications 6 à 8, **caractérisé en ce qu'**il est prévu un connecteur (25) dans le logement, relié d'une part à la deuxième interface homme machine pour se connecter à la console et d'autre part à un haut-parleur (26) intégré à la première partie pour émettre les signaux sonores générés par la console.

10. Méthode pour l'exercice d'une activité physique au moyen d'un système de réalité virtuelle selon la revendication 1, **caractérisée en ce qu'**elle comprend les étapes consistant à:
- connecter la console de jeux vidéo avec l'accessoire immersif;
- intégrer la console dans le logement de l'accessoire, réservé à cet effet;
- positionner l'accessoire immersif de sorte que la posture des membres de l'utilisateur du système en contact avec les deux interfaces homme machine, est semblable à la posture des membres lors de l'exercice réel de l'activité physique.
